# EUROPEAN PATENT APPLICATION

(11) **EP 1 375 227 A1**
(43) Date of publication of application: **02.01.2004**
(21) Application number: 03253735.9
(22) Date of filing: 13.06.2003
(51) Int. Cl.: B60K 13/00, F16L 55/033

(54) **Mounting assembly**

(30) Priority: 27.06.2002 GB 0214818
(71) Applicant: Arvin International (UK) Limited, Preston, PR4 1TR (GB)
(72) Inventor: Jackson, Andrew Philip, Castlefield, Manchester, M15 4LB (GB)
(74) Representative: Croston, David

(57) **Abstract**

A mounting assembly (10) for securing, e.g. an exhaust pipe (134) to a vehicle body (132). The mounting assembly (10) comprises a mounting portion (10) arranged to be securable to the vehicle body (132), an exhaust receiving sleeve 12 and a knitted steel wire mesh washer 14. The washer 14 is arranged on the transmission path of vibrations from the exhaust pipe (134) through the assembly (10) so as to be capable of damping vibrations generated in the exhaust pipe (134) and transmitted through the assembly (10) (Fig. 1).

## Description

The present invention relates to a mounting assembly. Particularly, but not exclusively, the present invention relates to a mounting assembly for securing an exhaust component (muffler system component) to a vehicle body.

Known vehicle exhaust mounting assemblies are generally lightly damped so a small driving force can produce large deflections in an exhaust component secured to a vehicle using such mounting assemblies. This may lead to vibration and durability problems, especially in lightweight exhaust components. In turn the vibrations that are induced may lead to noise being generated in the vehicle cabin. Previously, this noise has been drowned out by noise from other sources that is transmitted to the cabin. However, significant strides in noise reduction in recent years from these sources has lead to noise contributions from exhaust components becoming more noticeable. Thus, it has also become increasingly desirable to minimise noise generated by vehicle exhaust components.

As exhaust components emit a considerable amount of heat when the vehicle engine is running, mounting assemblies need to be heat resistant and durable so as to withstand repeated heating and cooling cycles.

The present invention seeks to overcome, or at least mitigate the problems of the prior art.

An aspect of the present invention provides a mounting assembly for securing an exhaust component to a vehicle body, the mounting assembly comprising a mounting portion arranged to be securable to the vehicle body, an exhaust component receiving portion and a mesh heat resistant isolator portion positioned on a transmission path of vibrations from the exhaust component through the assembly so as to be capable of damping vibrations generated in the exhaust component and transmitted through the assembly.

Embodiments of the present invention will now described, by way of example only, with reference to the accompanying drawings in which:
FIGURE 1 is a perspective view of a mounting assembly according to one embodiment of the present invention;
FIGURES 2 and 3 are cross-sectional and side views of a mounting assembly according to a second embodiment of the present invention;
FIGURES 4 and 5 are cross-sectional and side views respectively of a mounting assembly according a third embodiment of present invention;
FIGURES 6 and 7 are cross-sectional and side views respectively of a mounting assembly according to a fourth embodiment of the present invention;
FIGURES 8 and 9 are cross-sectional and side views of a mounting assembly according to a fifth embodiment of the present invention; and
FIGURES 10 and 11 are cross-sectional and side views of a mounting assembly according to a sixth embodiment of the present invention.

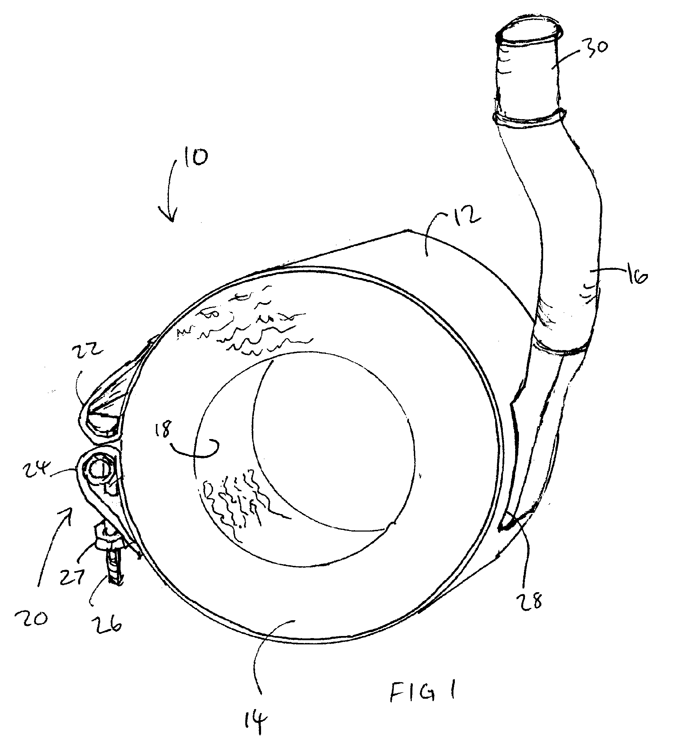

Referring to Figure 1, a mounting assembly 10 according to one embodiment of the present invention comprises a substantially tubular sleeve 12 retaining a knitted steel wire mesh washer 14 arranged to act as an isolator to damp vibrations. A suitable type of wire mesh washer material is supplied by Catalyst Support Systems of Unit 14, Thelwall New Road Industrial Estate, Thelwall New Road, Thelwall, Warrington, Cheshire WA4 2LY, UK. Washers 14 of this type are typically made by knitting stainless steel wire into a tube. This is then compressed in a moulding tool to form the washer 14. Other suitable types of mesh exhibiting comparable damping and heat resistant characteristics may also be used. The wire may be knitted to form other shapes required for the washers of the other embodiments (see below).

A mounting arm 16 is secured to the sleeve 12 and is arranged, in use, to mount the assembly to a part of a vehicle body.

The washer 14 defines a circular through bore 18 in the centre thereof, through which an exhaust component (not shown) intended to be mounted by the mounting assembly is inserted and secured.

The sleeve 12 comprises clamping means 20, provided to ensure that the exhaust component is securely held within the mounting assembly 10. Ends 22 and 24 of the sleeve 12 are bent back on themselves. In this embodiment, the clamping means 20 comprises a captive bolt 26 secured between apertures (not visible) provided in ends 22 and 24. Nut 27 is tightened so that the washer achieves a secure fit around the exhaust component. In some classes of the embodiment, the mounting assembly 10 must be slid along the exhaust component to the correct mounting location. In the other classes of embodiment, the washer 14 may be provided with a radial slit, and the sleeve may be sufficiently flexible or hinged to enable the assembly to be fitted over the exhaust component at the correct mounting location. This embodiment is particularly applicable to instances where an obstruction (such as a silencer or catalytic convertor) prevents the assembly 10 being slid along the component to the correct mounting location.

The mounting arm 16 is secured to the sleeve 12 by a weld 28 or other suitable connection, and is provided at its free end with a mounting portion 30 that is arranged to be secured to a vehicle body (not shown) by use of a suitable bracket or other connection (not shown) so that the exhaust component may be mounted in a spaced relationship to the body.

It has been found that knitted steel wire mesh of the type described provides satisfactory damping to vehicle engine exhaust components and is also able to operate for long periods under high temperatures. The remaining parts of the mounting assembly are also made from material able to withstand the heat emitted by the exhaust component.

In the following further embodiments, like parts have been denoted by like numerals, but with the addition of the prefix "1", "2", "3" etc. Only the differences between each embodiment are discussed in more detail.

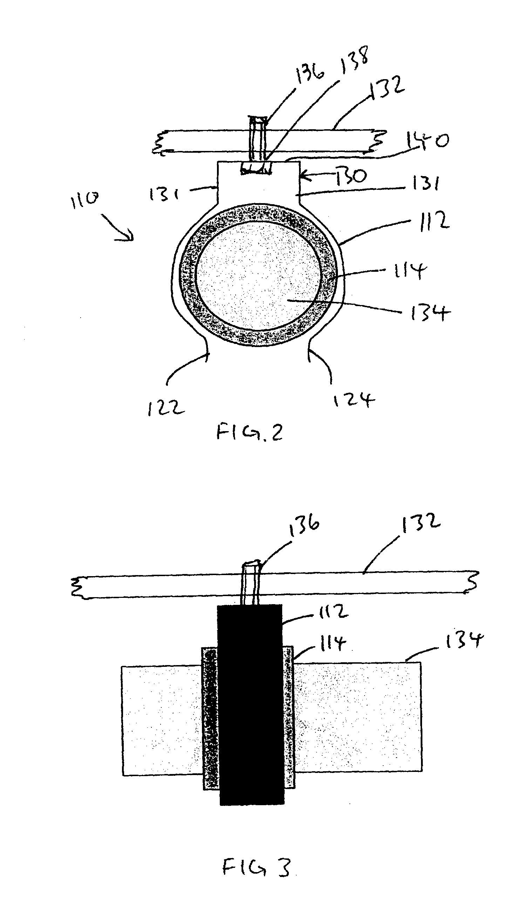

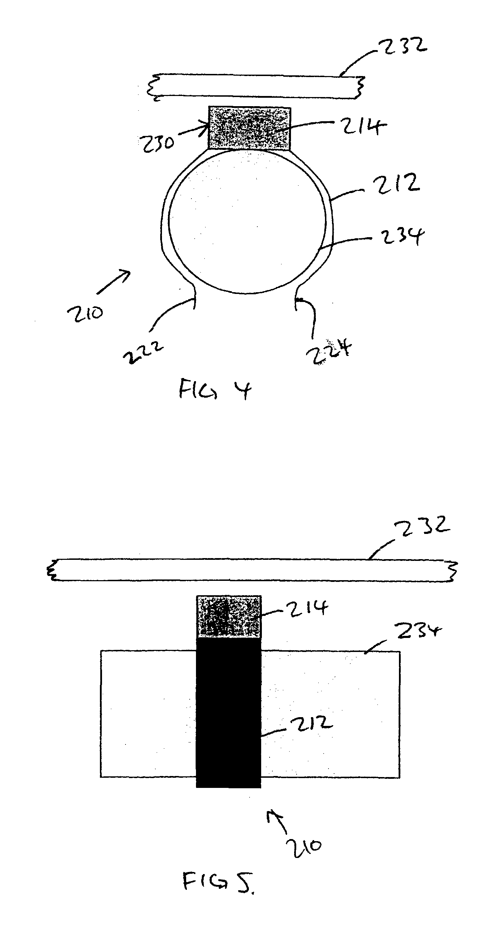

Turning now to Figures 2 and 3, it can be seen that in this embodiment the tubular sleeve 112 is bent to provide a mounting portion 130 in the form of a pair of spaced parallel surfaces 131 joined by a substantially planar mounting flange 140. Flange 140 has at least one hole 138 through which a bolt 136 may be inserted to mount the mounting assembly 110 to the vehicle body 132.

The clamping means arranged to secure the exhaust component 134 in the holder is not shown in this embodiment, but any suitable form of bolt or other connector may be inserted through the down-turned ends 122 and 124 of the sleeve. By forming the mounting portion 130 integrally with the sleeve 112, it can be seen that mounting assembly 110 may be simpler to manufacture than mounting assembly 10 of the first embodiment.

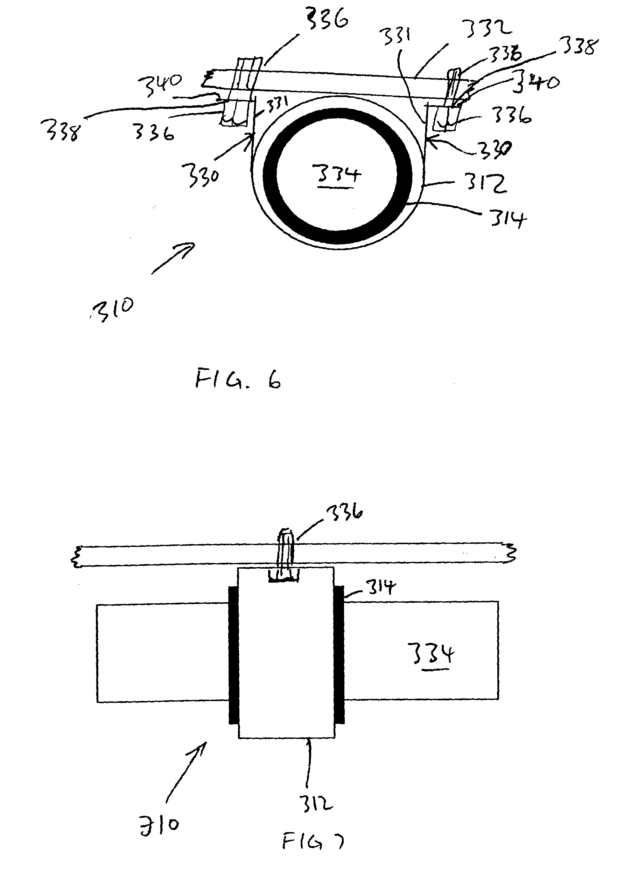

Turning to a third embodiment of the present invention as shown in Figures 4 and 5, it can be seen that in this embodiment the sleeve 212 is of a similar shape to the sleeve 112 of the second embodiment, but in this embodiment the knitted washer 214 is provided in the region of the mounting portion 230. This means that over the majority of the circumference of the exhaust component 234, it is in contact with the sleeve 212. Thus, the mounting assembly 210 of this embodiment may have a lower materials cost than the first two embodiments.

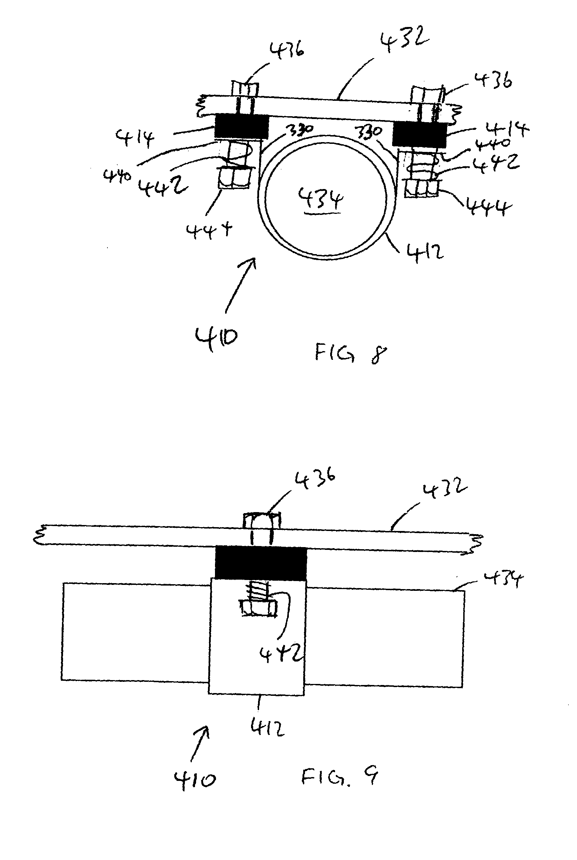

Figures 6 and 7 show a further embodiment of the mounting assembly 310. In this embodiment, the washer 314 is entirely encircled by the tubular sleeve 310, and a mounting portion 130 in the form of pair of brackets 331 extending upwardly from the sleeve 312. Each bracket 331 terminates in a flange 340 arranged to be parallel to the vehicle body 332. Each flange is provided with holes 338 through which bolts 336 may be secured to mount the exhaust component 234 on the body 332.

Turning to Figures, 8 and 9, the mounting assembly of this embodiment is similar to the mounting assembly of the fourth embodiment except that the knitted washer 414 is positioned intermediate each mounting portion 430 and the vehicle body 432 rather than between the exhaust component 434 and the tubular sleeve 412. Additionally, biasing means in the form of a helical compression spring 442 is provided between flanges 440 and nut 444 to resiliently bias the mounting assembly 410 into contact with the knitted washers 414. This enables the optimal amount of load to be applied to the washer in order to damp vibrations effectively. The biasing load may be adjusted by tightening or loosening nuts 444 as needed.

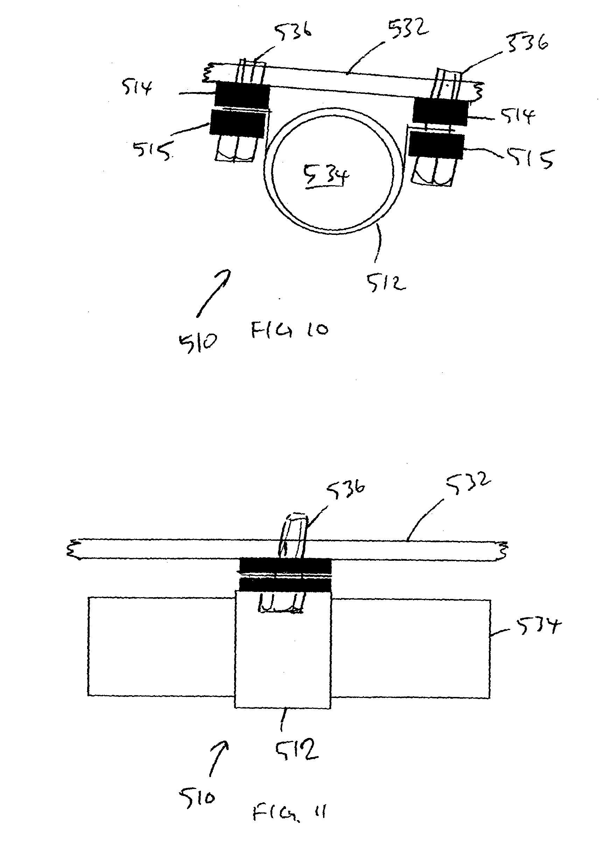

Finally, it can be seen from the sixth embodiment of the present invention illustrated in Figures 10 and 11 that the helical spring 442 has been replaced by a further washer of knitted steel mesh material 515. This similarly enables mounting assembly 510 to be isolated from the vehicle body 532 in order to reduce the vibrations transmitted from the exhaust component 534 to the vehicle.

The terms "upwardly" and "downwardly" etc have been used herein for ease of explanation and should not be construed as restricting the mounting assembly to being fitted in a particular orientation. The term "heat resistant" should be understood to mean that the material is capable of being heated to temperatures generated within an exhaust component when exhaust gases are passing there through without the material melting or degrading to the extent that it is no longer able to perform its required function. The term does not means that the material must act as a thermal insulator.

It should be appreciated that a wide variety of different configurations of mounting assembly may be provided to achieve an improved isolation of an exhaust component from the vehicle on which the exhaust component is being mounted, whilst maintaining the durability and heat resistance of the mounting assembly. The mounting assembly may be used to mount pipework portions of exhaust components, silencers and/or catalytic converter portions. Numerous changes to the mounting assembly may be made within the scope of the present invention. For example, other suitable fasteners may be used instead of the bolts illustrated and the mounting assembly may be altered to mount exhaust components having a non-circular cross-section.

## Claims

1. A mounting assembly for securing an exhaust component to a vehicle body, the mounting assembly comprising a mounting portion arranged to be securable to the vehicle body, an exhaust component receiving portion and a mesh heat resistant isolator portion positioned on a transmission path of vibrations from the exhaust component through the assembly so as to be capable of damping vibrations generated in the exhaust component and transmitted through the assembly.

2. A mounting assembly according to claim 1 wherein the isolator portion is proximate the exhaust component receiving portion in use.

3. A mounting assembly according to claim 2 wherein the isolator portion is arranged so as to be capable of at least partially encircling and receiving the exhaust component in use.

4. A mounting assembly according to claim 2 or claim 3 wherein the isolator portion is arranged so as to be contactable with the exhaust component in use.

5. A mounting assembly according to claim 3 wherein an inner sleeve is arranged to separate the isolator portion from the exhaust in use.

6. A mounting assembly according to any preceding claim wherein the exhaust component receiving portion at least partially encircles the isolator portion.

7. A mounting assembly according to claim 1 wherein the isolator portion is positioned proximate the mounting portion.

8. A mounting assembly according to claim 7 wherein the isolator portion is arranged to be capable of isolating the exhaust component and the mounting portion from the vehicle body.

9. A mounting assembly according to claim 8 wherein the isolator portion comprises a spacer between the mounting portion and the vehicle body.

10. A mounting assembly according to claim 9 wherein a resilient compression means biases the mounting portion into contact with the spacer.

11. A mounting assembly according to any preceding claim wherein the exhaust component receiving portion comprises clamp means.

12. A mounting assembly according to claim 11 wherein the clamp means enables the exhaust component receiving portion to be tightened around the exhaust component.

13. A mounting assembly according to claim 12 wherein the clamp means is releasable to permit the receiving portion to be fitted around the exhaust component.

14. A mounting assembly according to any preceding claim wherein the exhaust component receiving portion comprises a substantially tubular sleeve.

15. An exhaust system including a mounting assembly according to any preceding claim and an exhaust component.
